# EUROPÄISCHE PATENTSCHRIFT

(11) **EP 3 488 124 B1**
(45) Veröffentlichungstag und Bekanntmachung des Hinweises auf die Patenterteilung: **03.03.2021**
(21) Anmeldenummer: 17735533.6
(22) Anmeldetag: 05.07.2017
(51) Int. Cl.: F16H 57/04, F16H 1/06, F16H 57/02

(54) **ZAHNRADANORDNUNG, INSBESONDERE FÜR EINE DREHVERBINDUNG EINER WINDENERGIEANLAGE, WINDENERGIE MIT SELBIGER UND DICHTELEMENT FÜR SELBIGE**
GEAR ASSEMBLY, IN PARTICULAR FOR A ROTARY CONNECTION OF A WIND TURBINE, WIND TURBINE HAVING THE SAME, AND SEALING ELEMENT FOR THE SAME
ENSEMBLE DE ROUES DENTÉES, EN PARTICULIER POUR UNE COURONNE D'ORIENTATION D'UNE ÉOLIENNE, ÉOLIENNE POURVUE DUDIT ENSEMBLE ET ÉLÉMENT D'ÉTANCHÉITÉ POUR LEDIT ENSEMBLE

(30) Priorität: 21.07.2016 DE 102016213316
(43) Veröffentlichungstag der Anmeldung: 29.05.2019
(73) Patentinhaber: Wobben Properties GmbH, 26607 Aurich (DE)
(72) Erfinder: FRICKE, Werner, 26605 Aurich (DE); SCHLÜTER, Rainer, 26607 Aurich (DE)
(74) Vertreter: Eisenführ Speiser
(86) Internationale Anmeldenummer: PCT/EP2017/066826
(87) Internationale Veröffentlichungsnummer: WO 2018/015161

(56) Entgegenhaltungen:
- EP-A1- 0 585 099
- FR-A- 1 064 651
- US-A1- 2013 192 930

## Beschreibung

Die Erfindung betrifft eine Zahnradanordnung, insbesondere für eine Drehverbindung einer Windenergieanlage. Die Erfindung betrifft ferner eine Windenergieanlage. Die Erfindung betrifft ferner ein Dichtelement zum Abdichten einer Zahnradanordnung, insbesondere einer Windenergieanlage. Ferner betrifft die Erfindung ein Verfahren zum Schmieren einer Zahnradanordnung einer Windenergieanlage.

Windenergieanlagen sind allgemein bekannt. Auch allgemein bekannt ist die Verwendung von Zahnradanordnungen für Drehverbindungen von Windenergieanlagen an all jenen Stellen, an denen Teile rotatorisch relativ zueinander bewegt werden müssen. Im klassischen Sinne spricht man beispielsweise bei einem Azimutlager von einer Drehverbindung. An dieser Stelle wird die Gondel relativ zum Turm verdreht. Ein weiteres Beispiel für eine Drehverbindung wäre ein Pitchlager eines Rotorblattes.

Zahnradanordnungen der vorbezeichneten Art sind im Betrieb Belastungen unter anderem durch den die Drehung bewirkenden Antrieb ausgesetzt. So erzeugen die Zähne, die sich miteinander im Eingriff befinden, neben einer Abrollbewegung immer auch eine Reibbewegung relativ zueinander. An den mit Reibung beaufschlagten Stellen der Zahnflanken in der Zahnradanordnung entsteht Verschleiß. Um den Verschleiß zu begrenzen, werden die Zahnräder der Zahnradanordnungen in bekannter Weise daher durch Zufuhr von Schmierstoffen geschmiert. Dies soll die zwangsläufig auftretende Reibung und den einhergehenden Verschleiß verhindern.

Insbesondere bei den für Windenergieanlagen bekannten Drehverbindungen tritt der Verschleiß der Zahnradanordnung nicht gleichmäßig auf. Hervorzuhebendes Beispiel soll im Zusammenhang mit der Erfindung die Pitchlagerung der Windenergieanlage sein. Nachdem die Windenergieanlage installiert ist, ist sie in einer Vorzugsrichtung ausgerichtet, aus der überwiegend der die Windenergieanlage antreibende Wind kommt. Der zentrale, sich mit dem angetriebenen Zahnrad im Eingriff befindende Zahn des Antriebs-Zahnrades wird auch als der "goldene Zahn" bezeichnet. Da sich dieser Zahn häufiger in Eingriff mit dem gegenüberliegenden Zahnrad befindet als die übrigen Zähne des antreibenden Zahnrades, ist der Verschleiß dort entsprechend größer. Deswegen besteht hier ein besonderer Bedarf, ausreichend Schmiermittel zur Verfügung stellen zu können. Für Zahnradanordnungen im Allgemeinen gilt dies ebenso.

Im Stand der Technik behilft man sich bislang damit, dass man den Zahn oder die Zähne, die zu schmieren sind, in sehr kurzen Schmierintervallen mit Schmierstoff benetzt. Es sind beispielsweise Systeme bekannt, bei denen der Zahn bzw. die zu schmierenden Zähne mit einer fest an der Zahnradanordnung installierten Schmiermittelversorgung durch in den Zähnen liegende Kanäle mit Schmiermittel versorgt werden, welches dann in den Fußraum der jeweiligen Zahnräder eingefüllt wird.

Es hat sich allerdings gezeigt, dass das eingebrachte Schmiermittel nach kürzester Zeit wieder aus dem Spaltraum zwischen den ineinander eingreifenden Zahnrädern vertrieben wird, sodass sehr kurze Schmierintervalle und sehr hoher Schmiermittelverbrauch die Folge sind. Ein weiterer beobachteter Nachteil liegt darin, dass zum erneuten Schmieren der jeweils betroffenen Stelle der Zahnradanordnung ein Verschwenken des Antriebsritzels der Zahnradanordnung angetriebenen Drehverbindung um in der Regel ca. 90 - 180° erfolgen muss, damit das Ritzel zum Nachführen von Schmierstoff zugänglich wird. Dies kann für beträchtliche Einbußen der Energiegewinnung sorgen, da beispielsweise bei einer Pitchlagerung die Rotorblätter infolge der Verschwenkung der Zahnradanordnung in einem Winkel von 15 - 30° oder mehr außerhalb der bevorzugten Ausrichtung zum Wind stehen und nur noch sehr wenig bis gar keine Leistung mehr vom Wind aufnehmen.

EP 0 585 099 A1 offenbart ein selbstschmierendes Zahnrad mit einer umlaufenden Nut zwischen zwei Zahnreihen, in die ein Schmiermittel eingegeben und durch einen Elastomerring verschlossen wird. Beim Zusammenwirken mit einem weiteren Zahnrad wird das Schmiermittel kontrolliert aus der Nut abgegeben.

US 2013/192930 A1 bezieht sich auf eine Zahnradanordnung, umfassend zwei miteinander kämmende Zahnräder, wobei dem Antriebszahnrad ein Schmiermittelverteiler mit in die Zahnzwischenräume eingreifende Kanalelemente mit Austrittsöffnungen für Schmierstoff zugeordnet ist.

FR 1 064 561 A zeigt einen Zahnradantrieb, wobei an einem Zahnrad eine umlaufende Nut vorgesehen ist, innerhalb der ebenfalls ein Elastomerring als Dämpfer für das weitere Zahnrad des Zahnradantriebes angeordnet ist.

Die vorstehend beschriebenen Schmierlösungen, bei denen Schmiermittel durch die Zähne eingeführt wird, umgehen diese Problematik zwar, sind allerdings konstruktiv aufwendig.

Demzufolge lag der Erfindung die Aufgabe zugrunde, bei einer Zahnradanordnung der eingangs bezeichneten Art die vorstehend angesprochenen Nachteile möglichst weitgehend zu beheben. Insbesondere lag der Erfindung die Aufgabe zugrunde, eine Zahnradanordnung anzugeben, bei der das Schmierverhalten und die Fähigkeit, Schmiermittel zu halten, verbessert wird. Weiter lag der Erfindung insbesondere die Aufgabe zugrunde, den Verschleiß eines goldenen Zahns der Zahnradanordnung zu mindern.

Die Erfindung löst die ihr zugrunde liegende Aufgabe gemäß einem ersten Aspekt bei einer Zahnradanordnung der eingangs bezeichneten Art, indem die Zahnradanordnung gemäß Anspruch 1 ausgebildet ist. Es wird eine Zahnradanordnung vorgeschlagen, mit einem ersten Zahnrad, einem mit dem ersten Zahnrad in Eingriff stehenden zweiten Zahnrad, wobei in der Eingriffsstellung zwischen einem ersten Zahn und einem zweiten Zahn des ersten Zahnrads und einem zweiten Zahn des zweiten Zahnrads ein Spaltraum ausgebildet ist, und mit einem Dichtelement, welches zwischen dem ersten Zahnrad und dem zweiten Zahnrad angeordnet ist und den Spaltraum gegen Schmiermittelaustritt abdichtet. Die Erfindung macht sich die Erkenntnis zunutze, dass unabhängig von der Verzahnungsart immer ein geringer Spaltraum zwischen den ineinander kämmenden Zähnen des ersten und zweiten Zahnrades der Zahnradanordnung vorhanden ist. Durch diesen Spalt entweicht im Normalfall das Schmiermittel. Genau hier setzt die Erfindung an, indem der verfügbare Spaltraum mittels Einbringen eines Dichtelements zwischen das erste Zahnrad und das zweite Zahnrad an genau der Stelle nach außen hin verschlossen wird, an der vorzugsweise der Verschleiß minimiert werden soll. Das Dichtelement, welches vorzugsweise aus einem kompressiblen Material besteht, wird in dem Spaltraum infolge des Eingriffs zwischen dem ersten und dem zweiten Zahnrad zusammengequetscht und verschließt den Spaltraum, sodass zuvor eingebrachtes Schmiermittel nicht mehr durch den Spaltraum entweichen kann. Durch Verwendung des erfindungsgemäßen Schmiermittels hat sich eine überraschend starke Verbesserung des Verschleißverhaltens gezeigt.

Gemäß der Erfindung weist das Dichtelement eine erste Dichtlippe, eine zu der ersten Dichtlippe im Wesentlichen parallele zweite Dichtlippe aufweist, und derart auf dem ersten Zahnrad aufliegt, dass die erste Dichtlippe an einer Flanke eines ersten Zahns sitzt, und die zweite Dichtlippe an einer der Flanke des ersten Zahns zugewandten Flanke eines zu dem ersten Zahn benachbarten zweiten Zahns sitzt. Somit bilden die erste und zweite Dichtlippe eine Dichtung gegen radiales Ausweichen von Schmiermittel zwischen den Zähnen, wenn sich ein Zahn des zweiten Zahnrades zwischen dem ersten und zweiten Zahn des ersten Zahnrades im Eingriff befindet.

Vorteilhafte Weiterbildungen und bevorzugte Ausführungsformen der Zahnradanordnung ergeben sich aus den Unteransprüchen und den nachfolgenden Beschreibungen. So wird die Zahnradanordnung in einer ersten bevorzugten Ausführungsform dahingehend weitergebildet, dass das Dichtelement eine dritte Dichtlippe und eine im Wesentlichen zu der dritten Dichtlippe parallele vierte Dichtlippe auf, und liegt derart auf dem ersten Zahnrad auf, dass sich die dritte und vierte Dichtlippe zumindest abschnittsweise entlang der Flanken des ersten und zweiten Zahns des ersten Zahnrades erstrecken und die erste und zweite Dichtlippe miteinander verbinden. Vorzugsweise sind die dritte und vierte Dichtlippe in einem Winkel von 90° +/- 5° ausgerichtet. Somit bilden die dritte und vierte Dichtlippe im Eingriff mit dem Zahn des zweiten Zahnrades zwischen dem ersten und dem zweiten Zahn des ersten Zahnrades eine Dichtung gegen axiales Ausweichen vom Schmiermittel aus. Besonders bevorzugt weist das Dichtelement die erste, zweite, dritte und vierte Dichtlippe auf.

In einer bevorzugten Ausgestaltung sind die dritte und vierte Dichtlippe jeweils mit einem Endabschnitt der ersten und zweiten Dichtlippe verbunden, sodass sie gemeinsam ein einstückiges Dichtelement ausbilden. Die dritte und vierte Dichtlippe sind vorzugsweise derart dimensioniert, dass sie im Eingriff mit dem Zahn des zweiten Zahnrades axial zu beiden Seiten des Zahns des zweiten Zahnrades überstehen und den Zahn des zweiten Zahnrades stirnseitig zumindest abschnittsweise umschließen. In dieser Ausgestaltung greift der gesamte Zahn gewissermaßen in eine durch das Dichtelement gebildete Tasche ein.

In einer besonders bevorzugten Ausgestaltung weist das Dichtelement eine Ausnehmung zur Aufnahme von Schmiermittel in den Bereich des Fußkreisdurchmessers des ersten Zahnrades auf, insbesondere begrenzt durch die erste, zweite, dritte und vierte Dichtlippe. Indem die erste, zweite, dritte und vierte Dichtlippe die Ausnehmung zwischen sich definieren und begrenzen, dient die Ausnehmung als Tasche zur Aufnahme des Schmiermittels. Die Tasche umschließt vorzugsweise den Bereich gegenüberliegend des Eingriffs des in die Ausnehmung eingreifenden Zahns des zweiten Zahnrades. Diese Ausgestaltung ist deswegen besonders vorteilhaft, weil die Ausnehmung bereits bei sehr geringem Verschwenken des ersten und zweiten Zahnrades zueinander von außen zugänglich wird. Bereits wenige Grad Verschwenkung genügen, um genug Spaltraum zwischen den Zahnrädern zu schaffen, dass eine Kanüle oder ähnliches Ausbringmittel einer Schmierstoffanbringungsvorrichtung zur Versorgung mit Schmierstoff zwischen die Zahnräder eingeführt werden kann, um Schmierstoff in die Ausnehmung und somit in den Bereich des Fußkreisdurchmessers des ersten Zahnrades einzuführen. Die Ausnehmung wird beim Verschwenken in die Eingriffsstellung zwischen dem ersten Zahn des zweiten Zahnrades und dem ersten und zweiten Zahn des ersten Zahnrades geschlossen, und das Schmiermittel kann seine Schmieraufgabe ausüben, ohne von den miteinander kämmenden Zähnen des ersten und zweiten Zahnrades axial und/oder radial aus dem Eingriff hinaus gepresst zu werden.

Die Erfindung ist besonders bevorzugt für den Einsatz an derjenigen Stelle der Zahnradanordnung vorgesehen, in der der goldene Zahn angeordnet ist. Es ist im Betrieb nicht immer von außen unmittelbar ersichtlich, welcher der Zähne des betroffenen Zahnrades der goldene Zahn ist. Daher schlägt eine bevorzugte Ausführungsform vor, dass das erste Zahnrad ferner wenigstens einen dritten Zahn und einen vierten Zahn aufweist, die zu beiden Seiten des ersten und zweiten Zahnes benachbart angeordnet sind, und das zweite Zahnrad ferner wenigstens einen zweiten und dritten Zahn aufweist, die zu beiden Seiten des ersten Zahnes benachbart angeordnet sind, wobei in der Eingriffsstellung zwischen den entsprechenden Zähnen des ersten Zahnrads und des zweiten Zahnrads jeweils ein Spaltraum ausgebildet ist, und das Dichtelement den Spaltraum jeweils gegen Schmiermittelaustritt abdichtet. Die Abschnitte des Dichtelements für die dritten und vierten Zähne des ersten Zahnrades, die sich jeweils im Eingriff mit dem zweiten und dritten Zahn des zweiten Zahnrades befinden, identisch ausgebildet wie vorstehend in Bezug auf den ersten und zweiten Zahn des ersten Zahnrades und den ersten Zahn des zweiten Zahnrades beschrieben. Mehrere erste und zweite Dichtlippen, vorzugsweise verbunden mit jeweils weiteren dritten und vierten Dichtlippen, liegen an einander zugewandten gegenüberliegenden Flanken benachbarter Zähne an, werden in Eingriff mit dem jeweils zweiten oder dritten Zahn des zweiten Zahnrades dichtend mit dem jeweiligen Zahn in Anlage gebracht und dichten so den zwischen den Zahnrädern verbleibenden Spaltraum gegen Schmiermittelaustritt ab.

Nach erfolgter Identifikation des goldenen Zahns dienen die weiteren Abschnitte des Dichtelements vorzugsweise als Reserve-Dichtelemente. Ist der Abschnitt des Dichtelements, der den goldenen Zahn gegen Schmiermittelverlust abdichtet, verschlissen, muss das Dichtelement lediglich um einen Zahn versetzt werden, und der Betrieb kann fortgesetzt werden.

Die Ausgestaltung des Dichtelements zum Abdichten mehrere Zähne prädestiniert das Dichtelement ferner zur Verwendung an angetriebenen Drehverbindungen wie etwa einem von Kränen und dergleichen.

Wie sich aus dem Vorstehenden bereits ergibt, weist also in weiteren bevorzugten Ausführungsformen das Dichtelement eine entsprechende Anzahl weiterer erster, zweiter, dritter und vierter Dichtlippen auf, wobei die ersten und zweiten Dichtlippen im Wesentlichen parallel zueinander sind, und die dritten und vierten Dichtlippen im Wesentlichen parallel zueinander sind.

Die ersten, zweiten, dritten und vierten Dichtlippen liegen auch für die weiteren Zähne derart auf dem ersten Zahnrad auf, dass die ersten Dichtlippen an einer jeweiligen Flanke des ersten, zweiten, dritten, und vierten Zahns sitzen, und die zweiten Dichtlippen an einer jeweils zugewandten Flanke des benachbarten Zahns sitzen, und sich die dritte und vierte Dichtlippe zumindest abschnittsweise entlang der Flanken des ersten, zweiten, dritten, und vierten Zahns des ersten Zahnrades erstrecken und die jeweiligen ersten und zweiten Dichtlippen miteinander verbinden.

Die Zahnradanordnung gemäß diesem Ausführungsbeispiel ist hinsichtlich der weiteren Abschnitte des Dichtelements vorzugsweise wie vorstehend in Bezug auf die obigen Ausführungsformen geschildert ausgebildet.

In einer bevorzugten Ausgestaltung der Erfindung sind die dritten und vierten Dichtlippen mittels eines Steges miteinander verbunden, der sich stirnseitig entlang des ersten Zahnrads erstreckt und vorzugsweise das Dichtelement axial an dem ersten Zahnrad fixiert.

Die dritten Dichtlippen sind also vorzugsweise mittels eines ersten Steges miteinander verbunden, während die vierten Dichtlippen vorzugsweise mittels eines zweiten Steges miteinander verbunden sind. Der erste und zweite Steg verhindern zuverlässig, dass das Dichtelement in axialer Richtung von dem ersten Zahnrad herunterrutscht.

In einer bevorzugten Ausgestaltung besteht das Dichtelement aus einem der folgenden Materialien: Polyurethan (PUR), Silikon-Kautschuk, Fluor-Silikon-Kautschuk, Fluor-Kautschuk, Acrylat-Kautschuk. Perfluor-Kautschuk, Polychlorpren-Kautschuk, Chlorsulfonyl-Polyäthylen-Kautschuk, Polyester-Urethan-Kautschuk, Butyl-Kautschuk, Natur-Kautschuk, Ethylen-Propylen-Dien-Kautschuk (EPDM), Nitrilkautschuk (NBR), hydrierter Nitril-Kautschuk (HNBR), APTK, Viton, oder aus einer Kombination mehrerer dieser Materialien.

Vorzugsweise weist das Dichtelement eine Shore-A-Härte in einem Bereich von 20 bis 90, bevorzugt in einem Bereich von 30 bis 65. Die Shore-A-Härte wird beispielsweise nach DIN EN ISO 868:2003-10 oder ISO 7619-1:2012-02 bestimmt.

Die Erfindung betrifft in einem zweiten Aspekt, wie eingangs erwähnt, eine Windenergieanlage. Die Erfindung löst die eingangs bezeichnete zugrundeliegende Aufgabe in Bezug auf eine Windenergieanlage, mit einer Drehverbindung, insbesondere einer Pitchdrehverbindung zur Rotorblattwinkelverstellung, und einer Zahnradanordnung zum Antrieb der Drehverbindung, wobei vorzugsweise das erste Zahnrad ein Zahnkranz ist, und das zweite Zahnrad ein Antriebsritzel ist, und wobei weiter vorzugsweise der Zahn des zweiten Zahnrades und der erste und zweite Zahn des ersten Zahnrades in einer Eingriffsstellung der Zahnradanordnung miteinander in Eingriff stehen, indem die Zahnradanordnung nach einer der vorstehend beschriebenen bevorzugten Ausführungsformen ausgebildet ist. Hinsichtlich der erreichten Vorteile und bevorzugten Ausführungsformen wird insoweit auf die obigen Ausführungen zur Zahnradanordnung verwiesen. Indem die Windenergieanlagen mit einer solchen erfindungsgemäßen Zahnradanordnung versehen wird, macht sie sich die entsprechenden Vorteile zu Eigen.

Ein einem dritten Aspekt betrifft die Erfindung auch das Dichtelement zum Abdichten einer Zahnradanordnung selbst.

Die Erfindung löst die ihr zugrundeliegende Aufgabe, indem sie die Verwendung eines Dichtelements zum Abdichten einer Zahnradanordnung vorschlägt, wobei das Dichtelement zwischen einem ersten Zahnrad und einem mit dem ersten Zahnrad in Eingriff stehenden zweiten Zahnrad anordenbar ist, wobei in der Eingriffsstellung zwischen einem ersten Zahn und einem zweiten Zahn des ersten Zahnrads und einem Zahn des zweiten Zahnrads ein Spaltraum ausgebildet ist, und wobei das Dichtelement dazu eingerichtet ist, den Spaltraum gegen Schmiermittelaustritt abzudichten, wobei das Dichtelement eine erste Dichtlippe, eine zu der ersten Dichtlippe im Wesentlichen parallele zweite Dichtlippe aufweist, und derart auf dem ersten Zahnrad aufliegt, dass die erste Dichtlippe an einer Flanke eines ersten Zahns sitzt, und die zweite Dichtlippe an einer der Flanke des ersten Zahns zugewandten Flanke eines zu dem ersten Zahn benachbarten zweiten Zahns sitzt.

Das Dichtelement wird vorzugsweise weitergebildet nach einer der vorstehend beschriebenen bevorzugten Ausführungsformen, die zur erfindungsgemäßen Zahnradanordnung weiter oben dargelegt worden sind. Das Dichtelement leistet den entscheidenden Beitrag zum besseren Haltevermögen von Schmiermittel zwischen den Zähnen der Zahnradanordnung.

Die Erfindung betrifft, wie eingangs erwähnt, in einem vierten Aspekt ein Verfahren zum Schmieren der Zahnradanordnung einer Windenergieanlage. Die Windenergieanlage ist hierfür insbesondere entsprechend einer der vorstehend beschriebenen bevorzugten Ausführungsformen ausgebildet. Das erfindungsgemäße Verfahren löst die eingangs bezeichnete Aufgabe, indem es die Schritte umfasst: Verschwenken der Zahnradanordnung um einen bestimmten Winkelbetrag, sodass der Spaltraum zwischen dem ersten und zweiten Zahn des ersten Zahnrads und dem Zahn des zweiten Zahnrads zugänglich wird, vorzugweise um weniger als 15°, besonders bevorzugt um 2° oder weniger, Zuführen von Schmiermittel in den Spaltraum, insbesondere mittels einer Schmierstoffausbringvorrichtung, die entweder permanent mit ihrer Auslassöffnung in den Spaltraum mündend angeordnet ist, oder mit ihrer Auslassöffnung in den Spaltraum eingeführt wird, und Rückverschwenken der Zahnradanordnung um den vorbestimmten Winkelbetrag, so dass das Dichtelement den Spaltraum abdichtet.

Vorzugsweise wird das Einführen der Auslassöffnung in den Spaltraum mit dem Verschwenken der Zahnradanordnung derart synchronisiert, dass bei Überschreiten des vorbestimmten Winkelbereichs der Verschwenkung der Zahnradanordnung automatisch Schmiermittel durch die (entweder permanent angeordnete oder intermittierend in den Spaltraum eingeführte) Auslassöffnung der Schmierstoffausbringvorrichtung in den Spaltraum eingeführt wird, eine vorbestimmte Menge Schmiermittel in den Spaltraum abgegeben wird, aus dem Spaltraum entfernt wird, und anschließend das Rückverschwenken der Zahnradanordnung erfolgt.

Weiter vorzugsweise ist dieser Vorgang automatisiert und wird in vorbestimmten Zeitabständen wiederholt. Aufgrund des nur sehr geringen erforderlichen Verschwenkwinkels muss bei jedem solchen Vorgang nur ein sehr geringer Leistungsaufnahmeverlust in Kauf genommen werden. Somit ist es möglich und bevorzugt, in Zeitintervallen von 2 Stunden oder kürzer, weiter bevorzugt 1 Stunde oder kürzer, besonders bevorzugt 30 min oder kürzer, den vorstehend beschriebenen Vorgang, auch bezeichnet als "Schmierfahrt", zu wiederholen.

Die Erfindung wird nachfolgend unter Bezugnahme auf die beigefügten Figuren anhand eines bevorzugten Ausführungsbeispiels näher beschrieben. Hierbei zeigen:
- Fig. 1: eine schematische räumliche Ansicht einer Windenergieanlage gemäß der vorliegenden Erfindung,
- Fig. 2a: einen schematische Querschnittsansicht der Verbindungsstelle zwischen Rotornabe und Rotorblatt der Windenergieanlage gemäß Fig. 1,
- Fig. 2b: eine schematische Querschnittsansicht der Verbindungsstelle zwischen Turm und Gondel der Windenergieanlage gemäß Fig. 1,
- Fig. 3: eine erfindungsgemäße Zahnradanordnung für eine Windenergieanlage nach den Fig. 1 und 2a,b,
- Fig. 4: eine Detailansicht zu der Zahnradanordnung gemäß Fig. 3, und
- Fig. 5: eine schematische räumliche Ansicht eines Dichtelements für eine Zahnradanordnung gemäß den vorstehenden Figuren.

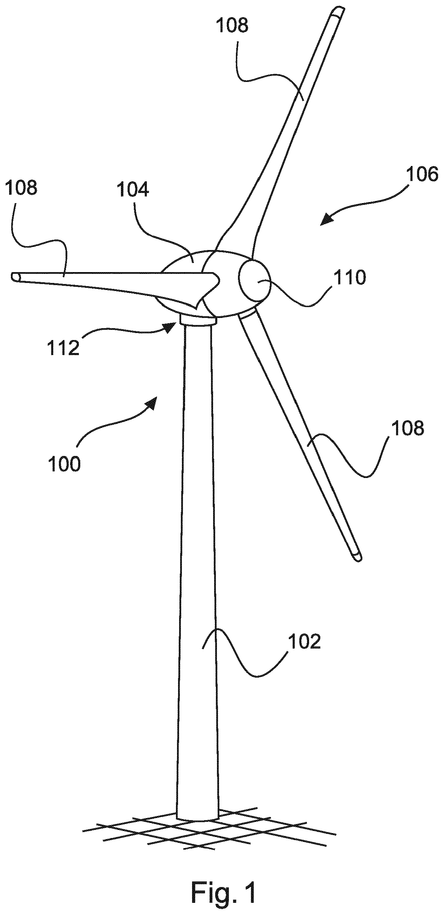

Fig. 1 zeigte eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen (nicht dargestellten) Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Der Generator ist vorzugsweise als langsam drehender Synchrongenerator ausgebildet.

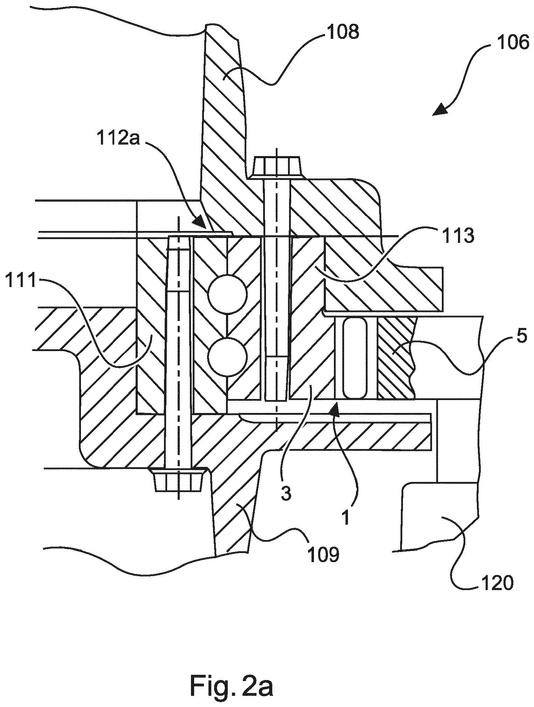

Der Rotor 106 weist eine Rotornabe 109 auf, an der die Rotorblätter 108 mittels jeweils einer ersten Drehverbindung 112a in Form einer Pitchdrehverbindung gelagert sind. Figur 2a zeigt eine solche Pitchdrehverbindung. Die erste Drehverbindung weist einen ersten Lagerring 111 auf, der an der Rotornabe 109 befestigt ist, und einen zweiten Lagerring 113, der mit einem Rotorblatt 109 verbunden ist. Die erste Drehverbindung 112a ist mit einer Zahnradanordnung 1 wirkverbunden, indem ein erstes Zahnrad 3 mit dem Rotorblatt drehfest verbunden ist, und ein zweites Zahnrad 5 als Antriebsritzel nabenseitig angeordnet ist. Das Antriebsritzel 5 wird vorzugsweise mittels einer Antriebseinheit 120 angetrieben.

Die Gondel 104 ist mittels einer zweiten Drehverbindung 112b mit dem Turm 102 verbunden.

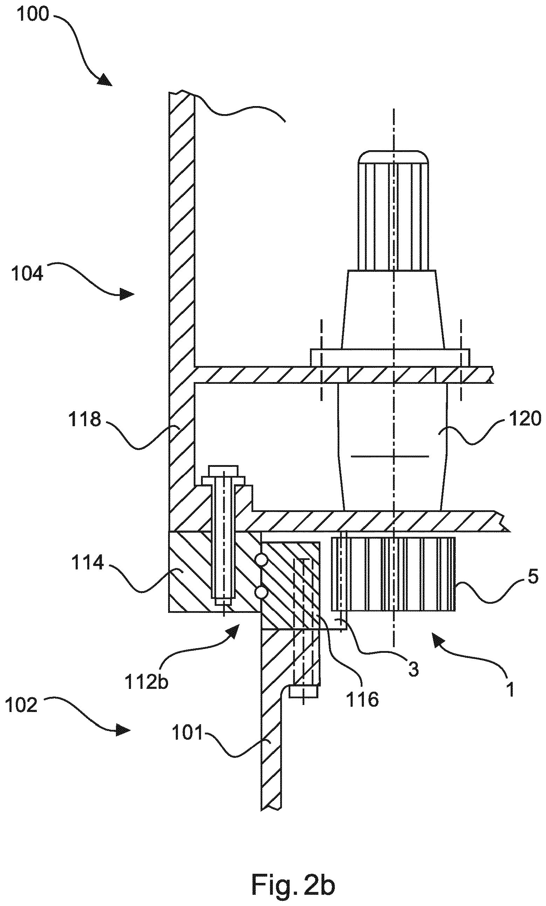

Fig. 2b zeigt eine zweite Drehverbindung 112b der Windenergieanlage 100 im Detail. Die Drehverbindung 112b weist einen ersten Lagerring 114 auf, der an einer Trägerstruktur 118 der Gondel 104 befestigt ist. Ferner weist die Drehverbindung 112b einen zweiten Lagerring 116 auf, der mit einem Schaftende 101 des Turms 102 verbunden ist.

Die Drehverbindung 112b ist mit einer Zahnradanordnung 1 wirkverbunden, indem ein erstes Zahnrad 3, welches in Form eines Zahnkranzes ausgebildet ist, turmseitig an der Drehverbindung 112b befestigt ist, und ein zweites Zahnrad 5, welches als Antriebsritzel ausgebildet ist, gondelseitig an der Drehverbindung 112b angeordnet ist. Das Antriebsritzel 5 wird vorzugsweise mittels einer Antriebseinheit 120 angetrieben. Die Windenergieanlage 100 kann optional mehrere solche Antriebseinheiten 120 und mehrere zweite Zahnräder 5 aufweisen, die mit dem ersten Zahnrad 3 in Eingriff stehen, um eine Rotationsbewegung der Gondel 104 relativ zum Turm 102 zu realisieren. Zum Verdeutlichen des Wesens der Erfindung wird nachfolgend lediglich auf eine Zahnradanordnung mit einem ersten Zahnrad 3 und einem zweiten Zahnrad 5 eingegangen, wobei die Lehre sinngemäß auch auf mehrere Zahnradanordnungen 1 an der Windenergieanlage 100 übertragbar ist.

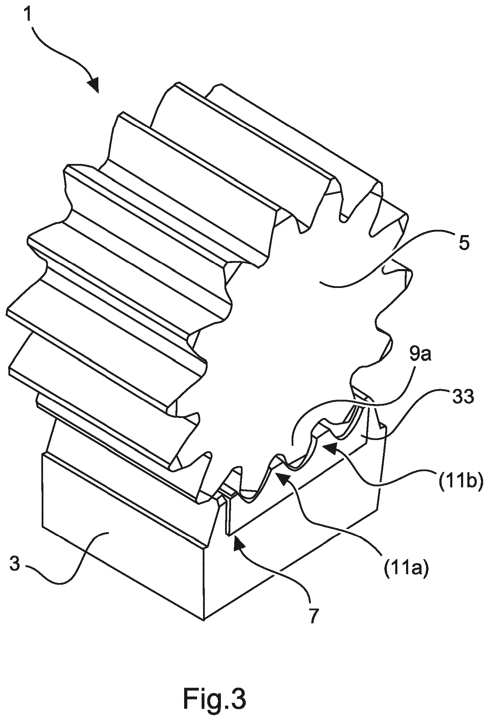

Wie sich aus Fig. 3 ergibt, weist das zweite Zahnrad 5 einen ersten Zahn 9a auf, der im vorliegenden Ausführungsbeispiel als der sogenannte "goldene Zahn" angenommen werden soll. In der in Fig. 3 gezeigten Eingriffsstellung befindet sich die Zahnradanordnung 1 die überwiegende Zeit im Betrieb der Windenergieanlage 100 (Fig. 1).

In der in Fig. 3 gezeigten Stellung befindet sich der Zahn 9a des zweiten Zahnrads 5 im Eingriff zwischen einem ersten Zahn 11a und einem zweiten Zahn 11b des ersten Zahnrades 3. Bei spiegelverkehrter Ausführung der Zahnradanordnung 1, in der also das erste Zahnrad das Anriebsritzel wäre, wäre beispielsweise der Zahn 11a oder 11b ein goldener Zahn. Im Übrigen weist die Zahnradanordnung zusätzlich am jeweils anderen Zahnrad einen zweiten goldenen Zahn auf, so dass man auch von einem "goldenen Zahnradpaar" sprechen kann. Üblicherweise ist das Ritzel deutlich härter als der angetriebene Zahnkranz, so dass sich Verschleißerscheinungen am Zahnkranz eher zeigen. Zudem ist der Zahnkranz nur schwer zu tauschen, so dass sein Schutz Priorität hat.

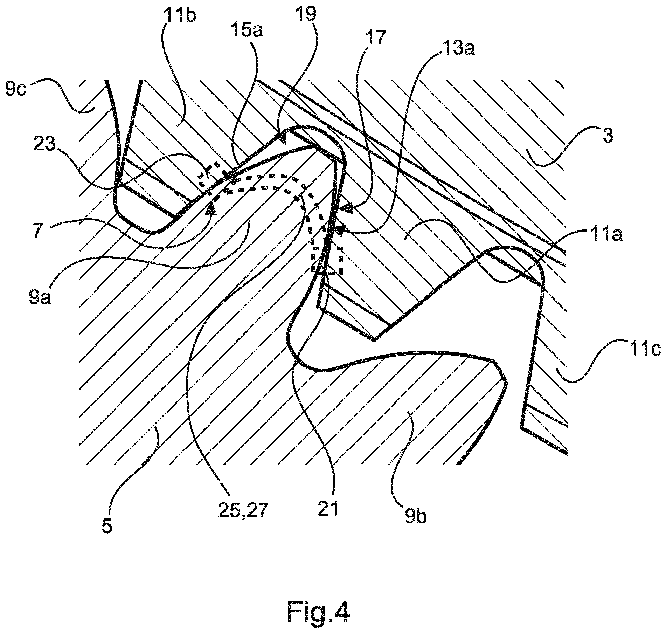

Zwischen dem ersten Zahn 9a des zweiten Zahnrads 5 und dem ersten und zweiten Zahn 11a, b des ersten Zahnrads 3 ist ein Spaltraum definiert (Fig. 4). Auf dem ersten Zahnrad 3 ist ferner ein Dichtelement 7 angeordnet, welches durch das zweite Zahnrad 5 im Eingriff komprimiert wird und den Spaltraum gegen Schmiermittelaustritt in axialer und radialer Richtung abdichtet. Einzelheiten hierzu ergeben sich aus den folgenden Figuren.

In Fig. 3 bzw. 4 ist die Eingriffssituation zwischen dem ersten Zahnrad 3 und dem zweiten Zahnrad 5 exemplarisch dargestellt sowie die prinzipielle Anordnung des Dichtelements 7. Zwischen dem Zahn 9a des zweiten Zahnrads 5 und zwei einander zugewandten Zahnflanken 13a, 15a des ersten und zweiten Zahns 11a, 11b des ersten Zahnrads 13 ist der Spaltraum 17 ausgebildet, der sich im Wesentlichen von der Stelle des Eingriffs zwischen den beiden Zahnrädern 3,5 bis in einen Fußbereich 19 des ersten Zahnrades 3 hinein erstreckt. In diesem Raum befindet sich im Betriebsfall Schmiermittel wie beispielsweise Schmierfett. Das Schmierfett könnte in einem Zustand ohne Dichtelement 7 in radialer Richtung entlang der Zahnflanken 13a, 15a sowie in axialer Richtung seitlich aus dem Spaltraum 17 entweichen. Um dies zu verhindern, ist das Dichtelement 7 derart zwischen das erste und zweite Zahnrad 3, 5 eingelegt, dass zwischen dem Zahn 9a des zweiten Zahnrads 5 und der Flanke 13 a des ersten Zahns 11a des ersten Zahnrades 3 eine erste Dichtlippe 21 sitzt und an einer gegenüberliegenden Seite des ersten Zahns 9a des zweiten Zahnrades 5 zwischen dem Zahn 9a und der Flanke 15a des zweiten Zahns 11b eine zweite Dichtlippe 23 angeordnet ist. Die Dichtlippen 21, 23 werden durch die Zähne 11a, 9a, 11b der Zahnräder 3, 5 komprimiert und dichten den Spaltraum 17 gegen Schmiermittelaustritt in radialer Richtung ab.

Zusätzlich weist das Dichtelement 7 eine dritte und vierte Dichtlippe 25, 27 auf, die jeweils mit einem Endbereich der ersten und zweiten Dichtlippen 21, 23 verbunden ist, und ein einem Randbereich des zweiten Zahnrades 5 dicht an den Flanken 13a, 15a, und dem Zahn 9a anliegt. Hierdurch wird ein Schmiermittelaustritt aus dem Spaltraum 17 in axialer Richtung nach außen verhindert.

Aus Fig. 4 wird auch ersichtlich, dass bereits ein Verschwenken der Zahnradanordnung 1 um wenige Grad aus der in Fig. 4 gezeigten Stellung heraus der Spaltraum nicht mehr dicht verschlossen ist, aber soweit geöffnet ist, dass eine Auslassöffnung eine Schmiermittelausbringvorrichtung in den Spaltraum 17 eingeführt werden kann, um Schmiermittel dort zu deponieren.

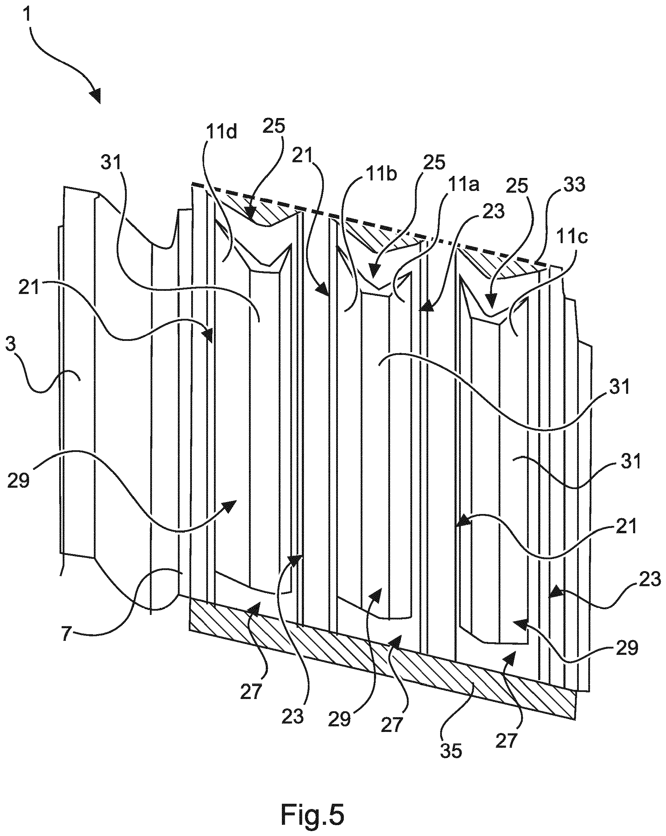

In Fig. 4 ist aus Gründen der leichteren Darstellung das Dichtelement nur im Eingriff mit dem Zahn 9a und den Zähnen 11a, 11b der Zahnräder 5, 3 abgebildet. Das gleiche Konzept ist jedoch auch übertragbar auf die benachbarten zweiten und dritten Zähne 9b, 9c des zweiten Zahnrads und die zu dem ersten und zweiten Zahn 11a, 11b benachbarten dritten und vierten Zähne 11c, d des ersten Zahnrads 3, wie in Fig. 5 dargestellt ist, sowie für jeden weiteren Zahn der Zahnradanordnung 1.

Wie sich aus Fig. 5 anschaulich ergibt, ist eine Ausnehmung 29 in dem Dichtelement 7 vorgesehen, und zwar jeweils begrenzt durch eine erste Dichtlippe 21, eine zweite Dichtlippe 23, eine dritte Dichtlippe 25, und eine vierte Dichtlippe 27. Es sind insgesamt drei solcher Ausnehmungen 29 vorgesehen. Die Ausnehmungen 29 dienen als Taschen, bzw. Schmierstoffdepots. Um die strukturelle Integrität des Dichtelements weiter zu verbessern, sind jeweils die dritten Dichtlippen 25 mit den vierten Dichtlippen 27 mittels mehrerer Stege 31 verbunden, die optional zusätzlich als Dichtlippen im Fußbereich des ersten Zahnrads 3 ausgebildet sein können.

Zum axialen Fixieren des Dichtelements 7 auf dem ersten Zahnrad 3 sind beidseitig des Zahnrads 3 an den Enden des Dichtelements 7 jeweils Stege 33, 35 ausgebildet, die die dritten Dichtlippen 25 miteinander verbinden, und die vierten Dichtlippen 27 miteinander verbinden.

Die vierten und dritten Dichtlippen 25, 27 sind vorzugsweise derart voneinander beabstandet und mit einer jeweiligen Breite versehen, das sie seitlich in axialer Richtung an den Stirnseiten des zweiten Zahnrads 5 überlappen (siehe Fig. 3 andeutungsweise). Somit umschließen auch die Dichtlippen das zweite Zahnrad 5 stirnseitig und verbessern zusätzlich die Dichtwirkung gegen axialen Schmiermittelaustritt.

Im Betrieb wird das erfindungsgemäße Schmierverfahren vorzugsweise wie folgt ausgeführt:
Nachdem zum Einrichten der Betriebsfähigkeit des Dichtelements 7 dieses auf das Zahnrad 3 aufgelegt wurde und die Ausnehmungen 29 mit Schmiermittel versorgt wurden, wird die Zahnradanordnung 1 in die Betriebsposition verschwenkt, sodass der erste Zahn 9a, bzw. goldener Zahn, in die Ausnehmung 29 zwischen dem ersten Zahn 11a und dem zweiten Zahn 11b des ersten Zahnrades 3 eingreift. Das Dichtelement 7 dichtet den Spaltraum 17 gegen Schmiermittelaustritt ab, solange sich der Zahn 9a im Eingriff befindet. Ändert sich die Windrichtung (bei einer Azimutdrehverbindung) bzw. geändertem Pitchwinkel (bei einer Pitchdrehverbindung) - leicht, gerät der Zahn 9a außer Eingriff, dafür aber einer der beiden Zähne 9b, 9c oder silberne Zähne, zwischen entweder den dritten Zahn 11c und den ersten Zahn 11a oder den vierten Zahn 11d und den zweiten Zahn 11b in Eingriff. Der sich dort ergebende Spaltraum wird in gleicher Weise abgedichtet wie vorstehend beschrieben.

Zum Neuversorgen der Ausnehmungen 29 mit Schmiermittel wird vorzugsweise eine Schmierfahrt durchgeführt. Bei der sogenannten Schmierfahrt wird die Zahnradanordnung 1 um wenige Grad, vorzugsweise weniger als 15°, besonders bevorzugt weniger als 2°, aus ihrer vorherigen Stellung herausbewegt. Sodann wird seitlich mittels einer Schmierstoffausbringvorrichtung, etwa einer Kanüle oder Ähnlichem, die eigens hierfür eingeführt wird oder alternativ permanent an der Zahnradanordnung angeordnet ist, Schmiermittel durch eine Auslassöffnung in eine der Ausnehmungen, die zuvor in Eingriff standen, eingeführt. Nach erfolgter Einführung wird Schmierstoff in die jeweilige Ausnehmung 29 eingebracht. Sofern es sich nicht um eine permanent angeordnete Vorrichtung handelt, wird die Schmierstoffausbringvorrichtung wieder entfernt und die Zahnradanordnung 1 in die vorherige Lage zurück geschwenkt. Dieser synchronisierte Vorgang ist vorzugsweise in vorab festgelegten Schmierintervallen zu wiederholen.

Nach Erreichen der Lebensdauer des Dichtelements 7 kann die Dichtwirkung mit sehr geringem Arbeitsaufwand durch einmaliges Verschwenken der Zahnradanordnung 1 um einen ausreichenden Winkelbetrag vom ersten Zahnrad 3 abgezogen und - in einer Ausführungsform mit mehreren Ausnehmungen 19 - durch einfaches Versetzen um einen Zahn, oder im Falle des vollständigen Verschleißes durch Auflegen eines neuen Dichtelements 7 wiederhergestellt werden.

Das Dichtelement 7, welches vorzugsweise aus einem kompressiblen Material besteht, ist mit geringem Kostenaufwand in hoher Stückzahl herstellbar und kann mit geringem Platzbedarf bevorratet werden, um erforderlichenfalls schnell zum Tausch verfügbar zu sein.

## Patentansprüche

1. Zahnradanordnung (1), insbesondere für eine Drehverbindung (112a,b) einer Windenergieanlage (100), mit
einem ersten Zahnrad (3), einem mit dem ersten Zahnrad (3) in Eingriff stehenden zweiten Zahnrad (5), wobei in der Eingriffstellung zwischen einem ersten Zahn (11a) und einem zweiten Zahn (11b) des ersten Zahnrads und einem Zahn (9a) des zweiten Zahnrads (5) ein Spaltraum (17) ausgebildet ist, und
einem Dichtelement (7), welches zwischen dem ersten Zahnrad (3) und dem zweiten Zahnrad (5) angeordnet ist und den Spaltraum (17) gegen Schmiermittelaustritt abdichtet, **dadurch gekennzeichnet, dass** das Dichtelement
- eine erste Dichtlippe (21),
- eine zu der ersten Dichtlippe im wesentlichen parallele zweite Dichtlippe (23) aufweist, und
- derart auf dem ersten Zahnrad (3) aufliegt, dass die erste Dichtlippe (21) an einer Flanke (13a) eines ersten Zahns (11a) sitzt, und die zweite Dichtlippe (23) an einer der Flanke des ersten Zahns zugewandten Flanke (15a) eines zu dem ersten Zahn benachbarten zweiten Zahns (11b) sitzt.

2. Zahnradanordnung nach Anspruch 1,
wobei das Dichtelement eine dritte Dichtlippe (25) und eine im wesentlichen zu der dritten Dichtlippe parallele vierte Dichtlippe (27) aufweist, und
derart auf dem ersten Zahnrad (3) aufliegt, dass sich die dritte und vierte Dichtlippe zumindest abschnittsweise entlang der Flanken (13a, 15a) des ersten und zweiten Zahns (11a, 11b) des ersten Zahnrades (3) erstrecken und die erste und zweite Dichtlippe (21,23) miteinander verbinden.

3. Zahnradanordnung nach Anspruch 2,
wobei die dritte und vierte Dichtlippe (25, 27) jeweils mit einem Endabschnitt der ersten und zweiten Dichtlippe (21, 23) verbunden sind.

4. Zahnradanordnung nach Anspruch 2 oder 3, wobei die dritte und vierte Dichtlippe (23, 25) derart dimensioniert sind, dass sie im Eingriff mit dem Zahn (9a) des zweiten Zahnrades (5) axial zu beiden Seiten überstehen und den Zahn (9a) des zweiten Zahnrades (5) stirnseitig zumindest abschnittsweise umschließen.

5. Zahnradanordnung nach einem der vorstehenden Ansprüche,
wobei das Dichtelement (7) eine Ausnehmung (29) zur Aufnahme von Schmiermittel in den Bereich (19) des Fußkreisdurchmessers des ersten Zahnrades (3) aufweist, insbesondere begrenzt durch die erste, zweite, dritte und vierte Dichtlippe (21, 23, 25, 27).

6. Zahnradanordnung nach einem der vorstehenden Ansprüche,
wobei das erste Zahnrad (3) ferner wenigstens einen dritten Zahn (11c) und einen vierten Zahn (11d) aufweist, die zu beiden Seiten des ersten und zweiten Zahns (11a, 11b) benachbart angeordnet sind, und
das zweite Zahnrad (5) ferner wenigstens einen zweiten und dritten Zahn (9b,9c) aufweist, die zu beiden Seiten des ersten Zahns (9a) benachbart angeordnet sind,
wobei in der Eingriffstellung zwischen den entsprechenden Zähnen des ersten Zahnrads und des zweiten Zahnrads jeweils ein Spaltraum (17) ausgebildet ist, und
das Dichtelement den Spaltraum jeweils gegen Schmiermittelaustritt abdichtet.

7. Zahnradanordnung nach Anspruch 6,
wobei das Dichtelement (7) eine entsprechende Anzahl weiterer erster, zweiter, dritter und vierter Dichtlippen (21, 23, 25, 27) aufweist, wobei
- die ersten und zweiten Dichtlippen (21, 23) im wesentlichen parallel zueinander sind, und
- die dritten und vierten Dichtlippen (25, 27) im wesentlichen parallel zueinander sind.

8. Zahnradanordnung nach Anspruch 6 oder 7,
wobei die ersten, zweiten, dritten und vieren Dichtlippen (21, 23, 25, 27) derart auf dem ersten Zahnrad (3) aufliegen, dass
- die ersten Dichtlippen (21) an einer jeweiligen Flanke des ersten, zweiten, dritten und vierten Zahns (11a-d) sitzen, und die zweiten Dichtlippen (23) an einer jeweils zugewandten Flanke des benachbarten Zahns sitzen, und
- sich die dritte und vierte Dichtlippe (25, 27) zumindest abschnittsweise entlang der Flanken des ersten zweiten, dritten und vierten Zahns (11a-d) des ersten Zahnrades (3) erstrecken und die jeweiligen ersten und zweiten Dichtlippen (21, 23) miteinander verbinden.

9. Zahnradanordnung nach einem der Ansprüche 7 oder 8,
wobei die dritten und vierten Dichtlippen (25, 27) mittels eines Stegs (33, 35) miteinander verbunden sind, der sich stirnseitig entlang des ersten Zahnrads (3) erstreckt, und vorzugsweise das Dichtelement (7) axial an dem ersten Zahnrad (3) fixiert.

10. Zahnradanordnung nach einem der Ansprüche 7 bis 9,
wobei das Dichtelement (7) aus einem der folgenden Materialien besteht: Polyurethan (PUR), Silikon-Kautschuk, Fluor-Silikon-Kautschuk, Fluor-Kautschuk, Acrylat-Kautschuk. Perfluor-Kautschuk, Polychlorpren-Kautschuk, Chlorsulfonyl-Polyäthylen-Kautschuk, Polyester-Urethan-Kautschuk, Butyl-Kautschuk, Natur-Kautschuk, Ethylen-Propylen-Dien-Kautschuk (EPDM), Nitrilkautschuk (NBR), hydrierter Nitril-Kautschuk (HNBR), APTK, Viton, oder aus einer Kombination mehrerer dieser Materialien.

11. Windenergieanlage (100), mit
einer Drehverbindung (112a,b), insbesondere einer Azimutdrehverbindung zur Gondelwinkelverstellung oder einer Pitchdrehverbindung zur Rotorblattwinkelverstellung, und einer Zahnradanordnung (1) zum Antrieb der Drehverbindung (112a,b), wobei vorzugsweise das erste Zahnrad (3) ein Zahnkranz ist, und das zweite Zahnrad (5) ein Antriebsritzel ist, und wobei weiter vorzugsweise der Zahn (9a) des zweiten Zahnrades und der erste und zweite Zahn (11a,b) des ersten Zahnrades (3) in einer Eingriffsstellung der Zahnradanordnung miteinander in Eingriff stehen,
**dadurch gekennzeichnet, dass** die Zahnradanordnung nach einem der vorstehenden Ansprüche ausgebildet ist.

12. Dichtelement (7) zum Abdichten einer Zahnradanordnung,
wobei das Dichtelement zwischen einem ersten Zahnrad (3) und einem mit dem ersten Zahnrad (3) in Eingriff stehenden zweiten Zahnrad (5) anordenbar ist, wobei in der Eingriffstellung zwischen einem ersten Zahn (11a) und einem zweiten Zahn (11b) des ersten Zahnrads und einem Zahn (9a) des zweiten Zahnrads ein Spaltraum (17) ausgebildet ist, und wobei das Dichtelement (7) dazu eingerichtet ist, den Spaltraum (17) gegen Schmiermittelaustritt abzudichten,
**dadurch gekennzeichnet, dass** das Dichtelement
- eine erste Dichtlippe (21), - eine zu der ersten Dichtlippe im wesentlichen parallele zweite Dichtlippe (23) aufweist, und
- derart auf dem ersten Zahnrad (3) aufliegt, dass die erste Dichtlippe (21) an einer Flanke (13a) eines ersten Zahns (11a) sitzt, und die zweite Dichtlippe (23) an einer der Flanke des ersten Zahns zugewandten Flanke (15a) eines zu dem ersten Zahn benachbarten zweiten Zahns (11b) sitzt.

13. Verfahren zum Schmieren der Zahnradanordnung einer Windenergieanlage nach Anspruch 11,
umfassend die Schritte:
- Verschwenken der Zahnradanordnung um einen vorbestimmten Winkelbetrag, so dass der Spaltraum (17) zwischen dem ersten und dem zweiten Zahn des ersten Zahnrads (3) und dem Zahn des zweiten Zahnrads (5) zugänglich wird, vorzugsweise um weniger als 15°, besonders bevorzugt um 2° oder weniger;
- Zuführen von Schmiermittel in den Spaltraum (17), insbesondere mittels einer Schmierstoffausbringvorrichtung, die permanent mit ihrer Auslassöffnung in dem Spaltraum (17) mündend angeordnet ist, oder die mit ihrer Auslassöffnung in den Spaltraum (17) eingeführt wird, und
- Rückverschwenken der Zahnradanordnung um den vorbestimmten Winkelbetrag, so dass das Dichtelement (1) den Spaltraum (17) abdichtet.

## Claims

1. A gear arrangement (1), in particular for a rotary connection (112a, b) of a wind turbine (100), comprising
a first gear (3), a second gear (5) in engagement with the first gear (3), wherein in the engaged position a gap space (17) is provided between a first tooth (11a) and a second tooth (11b) of the first gear and a tooth (9a) of the second gear (5), and
a sealing element (7) which is arranged between the first gear (3) and the second gear (5) and seals off the gap space (17) to prevent lubricant escape,
**characterised in that** the sealing element - has a first sealing lip (21), and
- a second sealing lip (22) substantially parallel to the first sealing lip, and
- rests on the first gear (3) in such a way that the first sealing lip (21) is seated at a flank (13a) of a first tooth (11a) and the second sealing lip (23) is seated at a flank (15a) of a second tooth (11b) adjacent to the first tooth, facing the flank of the first tooth.

2. A gear arrangement according to claim 1
wherein the sealing element has a third sealing lip (25) and a fourth sealing lip (27) substantially parallel to the third sealing lip and
rests on the first gear (3) in such a way that the third and fourth sealing lips extend at least portion-wise along the flanks (13a, 15a) of the first and second teeth (11a, 11b) of the first gear (3) and connect the first and second sealing lips (21, 23) together.

3. A gear arrangement according to claim 2
wherein the third and fourth sealing lips (25, 27) are respectively connected to an end portion of the first and second sealing lips (21, 23).

4. A gear arrangement according to claim 2 or claim 3
wherein the third and fourth sealing lips (23, 25) are of such dimensions that in engagement with the tooth (9a) of the second gear (5) they project axially on both sides and at least portion-wise surround the tooth (9a) of the second gear (5) at the end.

5. A gear arrangement according to one of the preceding claims
wherein the sealing element (7) has a recess (29) for receiving lubricant into the region (19) of the root circle diameter of the first gear (3), in particular delimited by the first, second, third and fourth sealing lips (21, 23, 25, 27).

6. A gear arrangement according to one of the preceding claims
wherein the first gear (3) further has at least one third tooth (11c) and a fourth tooth (11d), which are arranged in adjacent relationship at both sides of the first and second teeth (11a, 11b), and
the second gear (5) further has at least a second and third tooth (9b, 9c) which are arranged in adjacent relationship at both sides of the first tooth (9a),
wherein in the engagement position a respective gap space (17) is provided between the corresponding teeth of the first gear and the second gear, and
the sealing element seals off the gap space respectively to prevent lubricant escape.

7. A gear arrangement according to claim 6
wherein the sealing elements (7) has a corresponding number of further first, second, third and fourth sealing lips (21, 23, 25, 27), wherein
- the first and second sealing lips (21, 23) are substantially parallel to each other, and
- the third and fourth sealing lips (25, 27) are substantially parallel to each other.

8. A gear arrangement according to claim 6 or claim 7
wherein the first, second, third and fourth sealing lips (21, 23, 25, 27) bear against the first gear (3) in such a way that
- the first sealing lips (21) sit on a respective flank of the first, second, third and fourth tooth (11a, 11d) and the second sealing lips (23) sit on a respectively facing flank of the adjacent tooth, and
- the third and fourth sealing lips (25, 27) extend at least portion-wise along the flanks of the first, second, third and fourth teeth (11a-d) of the first gear (3) and connect the respective first and second sealing lips (21, 23) together.

9. A gear arrangement according to one of claims 7 and 8
wherein the first and fourth sealing lips (25, 27) are connected together by means of a bar (33, 35) which extends at the end along the first gear (3) and preferably fixes the sealing element (7) axially to the first gear (3).

10. A gear arrangement according to one of claims 7 to 9
wherein the sealing element (7) comprises one of the following materials: polyurethane (PUR), silicone rubber, fluorosilicone rubber, fluoro rubber, acrylate rubber, perfluoro rubber, polychloroprene rubber, chlorosulphonated polyethylene rubber, polyester urethane rubber, butyl rubber, natural rubber, ethylene propylene diene rubber (EPDM), nitrile rubber (NBR), hydrated nitrile rubber (HNBR), APTK, Viton or a combination of a plurality of those materials.

11. A wind turbine (100) comprising
a rotary connection (112a, b), in particular an azimuth rotary connection for pod angle adjustment or a pitch rotary connection for rotor blade angle adjustment, and a gear arrangement (1) for driving the rotary connection (112a, b), wherein preferably
the first gear (3) is a ring gear and the second gear (5) is a drive pinion and wherein further preferably the tooth (9a) of the second gear and the first and second teeth (11a, b) of the first gear (3) are in engagement with each other in an engagement position of the gear arrangement,
**characterised in that** the gear arrangement is in accordance with one of the preceding claims.

12. A sealing element (7) for sealing a gear arrangement,
wherein the sealing element can be arranged between a first gear (3) and a second gear (5) in engagement with the first gear (3), wherein in the engagement position a gap space (17) is provided between a first tooth (11a) and a second tooth (11b) of the first gear and a tooth (9a) of the second gear and wherein the sealing element (7) is adapted to seal off the gap space (17) to prevent lubricant escape,
**characterised in that** the sealing element has
- a first sealing lip (21), and
- a second sealing lip (22) substantially parallel to the first sealing lip and
- rests on the first gear (3) in such a way that the first sealing lip (21) is seated at a flank (13a) of a first tooth (11a) and the second sealing lip (23) is seated at a flank (15a) of a second tooth (11b) adjacent to the first tooth, facing the flank of the first tooth.

13. A method of lubricating the gear arrangement of a wind turbine according to claim 11, including the steps:
- pivoting the gear arrangement through a predetermined angular amount so that the gap space (17) between the first and second teeth of the first gear (3) and the tooth of the second gear (5) is accessible, preferably through less than 15°, particularly preferably through 2° or less,
- feeding lubricant into the gap space (17), in particular by means of a lubricant application device which is arranged permanently opening with its outlet opening into the gap space (17) or which is introduced with its outlet opening into the gap space (17), and
- pivoting the gear arrangement back through the predetermined angular amount so that the sealing element (1) seals off the gap space (17).

## Revendications

1. Ensemble de roues dentées (1), en particulier pour une liaison rotative (112a, b) d'une éolienne (100), avec
une première roue dentée (3), une deuxième roue dentée (5) se trouvant en prise avec la première roue dentée (3), dans lequel, dans la position de prise entre une première dent (11a) et une deuxième dent (11b) de la première roue dentée et une dent (9a) de la deuxième roue dentée (5), un espace interstitiel (17) est réalisé, et
un élément d'étanchéité (7) qui est agencé entre la première roue dentée (3) et la deuxième roue dentée (5) et rend étanche l'espace interstitiel (17) contre une sortie de lubrifiant,
**caractérisé en ce que** l'élément d'étanchéité
- présente une première lèvre étanche (21),
- une deuxième lèvre étanche (23) sensiblement parallèle à la première lèvre étanche, et
- repose sur la première roue dentée (3) de telle manière que la première lèvre étanche (21) loge au niveau d'un flanc (13a) d'une première dent (11a), et la deuxième lèvre étanche (23) loge au niveau d'un flanc (15a) ; tourné vers le flanc de la première dent, d'une deuxième dent (11b) contigüe à la première dent.

2. Ensemble de roues dentées selon la revendication 1,
dans lequel l'élément d'étanchéité présente une troisième lèvre étanche (25) et une quatrième lèvre étanche (27) sensiblement parallèle à la troisième lèvre étanche, et
repose sur la première roue dentée (3) de telle manière que les troisième et quatrième lèvres étanches s'étendent au moins par sections le long des flancs (13a, 15a) des première et deuxième dents (11a, 11b) de la première roue dentée (3) et relient les première et deuxième lèvres étanches (21, 23) entre elles.

3. Ensemble de roues dentées selon la revendication 2,
dans lequel les troisième et quatrième lèvres étanches (25, 27) sont reliées respectivement à une section d'extrémité des première et deuxième lèvres étanches (21, 23).

4. Ensemble de roues dentées selon la revendication 2 ou 3, dans lequel les troisième et quatrième lèvres étanches (23, 25) sont dimensionnées de telle manière qu'en prise avec la dent (9a), elles dépassent de la deuxième roue dentée (5) axialement des deux côtés et entourent côté avant au moins par sections la dent (9a) de la deuxième roue dentée (5).

5. Ensemble de roues dentées selon l'une des revendications précédentes,
dans lequel l'élément d'étanchéité (7) présente un évidement (29) pour la réception de lubrifiant dans la zone (19) du diamètre du cercle de pied de la première roue dentée (3), en particulier délimité par les première, deuxième, troisième et quatrième lèvres étanches (21, 23, 25, 27).

6. Ensemble de roues dentées selon l'une des revendications précédentes,
dans lequel la première roue dentée (3) présente en outre au moins une troisième dent (11c) et une quatrième dent (lld) qui sont agencées de manière contiguë des deux côtés des première et deuxième dents (11a, 11b), et
la deuxième roue dentée (5) présente en outre au moins une deuxième et une troisième dent (9b, 9c) qui sont agencées de manière contiguë des deux côtés de la première dent (9a),
dans lequel, dans la position de prise entre les dents correspondantes de la première roue dentée et de la deuxième roue dentée, respectivement un espace interstitiel (17) est réalisé, et
l'élément d'étanchéité rend étanche l'espace interstitiel respectivement contre une sortie de lubrifiant.

7. Ensemble de roues dentées selon la revendication 6,
dans lequel l'élément d'étanchéité (7) présente un nombre correspondant d'autres première, deuxième, troisième et quatrième lèvres étanches (21, 23, 25, 27), dans lequel
- les première et deuxième lèvres étanches (21, 23) sont sensiblement parallèles l'une à l'autre, et
- les troisième et quatrième lèvres étanches (25, 27) sont sensiblement parallèles l'une à l'autre.

8. Ensemble de roues dentées selon la revendication 6 ou 7,
dans lequel les première, deuxième, troisième et quatrième lèvres étanches (21, 23, 25, 27) reposent sur la première roue dentée (3) de telle manière que
- les premières lèvres étanches (21) logent au niveau d'un flanc respectif des première, deuxième, troisième et quatrième dents (lla-d), et les deuxièmes lèvres étanches (23) logent au niveau d'un flanc respectivement tourné vers la dent contigüe, et
- les troisième et quatrième lèvres étanches (25, 27) s'étendent au moins par sections le long des flancs des première, deuxième, troisième et quatrième dents (11a-d) de la première roue dentée (3) et relient les première et deuxième lèvres étanches (21, 23) respectives entre elles.

9. Ensemble de roues dentées selon l'une des revendications 7 ou 8,
dans lequel les troisième et quatrième lèvres étanches (25, 27) sont reliées entre elles au moyen d'une nervure (33, 35) qui s'étend côté avant le long de la première roue dentée (3) et fixe de préférence l'élément d'étanchéité (7) axialement à la première roue dentée (3).

10. Ensemble de roues dentées selon l'une des revendications 7 à 9,
dans lequel l'élément d'étanchéité (7) se compose d'un des matériaux suivants : polyuréthane (PUR), caoutchouc de silicone, caoutchouc de silicone fluoré, caoutchouc fluoré, caoutchouc d'acrylate, caoutchouc perfluoré, caoutchouc de polychloroprène, caoutchouc de polyéthylène de chlorosulfonyle, caoutchouc de polyester d'uréthane, caoutchouc butyle, caoutchouc naturel, caoutchouc d'éthylène-propylène-diène (EPDM), caoutchouc nitrile (NBR), caoutchouc nitrile hydrogéné (HNBR), APTK, Viton, ou d'une combinaison de plusieurs de ces matériaux.

11. Éolienne (100) avec
une liaison rotative (112a, b), en particulier une liaison rotative azimutale pour le réglage d'angle de nacelle ou une liaison rotative de calage pour le réglage d'angle de pale de rotor, et un ensemble de roues dentées (1) pour l'entraînement de la liaison rotative (112a, b), dans laquelle de préférence la première roue dentée (3) est une couronne dentée, et la deuxième roue dentée (5) est un pignon d'entraînement, et dans laquelle de manière davantage préférée la dent (9a) de la deuxième roue dentée et les première et deuxième dents (11a, b) de la première roue dentée (3) sont en prise dans une position de prise de l'ensemble de roues dentées entre elles,
**caractérisée en ce que** l'ensemble de roues dentées est réalisé selon l'une des revendications précédentes.

12. Élément d'étanchéité (7) pour rendre étanche un ensemble de roues dentées,
dans lequel l'élément d'étanchéité peut être agencé entre une première roue dentée (3) et une deuxième roue dentée (5) se trouvant en prise avec la première roue dentée (3), dans lequel, dans la position de prise entre une première dent (11a) et une deuxième dent (11b) de la première roue dentée et une dent (9a) de la deuxième roue dentée, un espace interstitiel (17) est réalisé, et dans lequel l'élément d'étanchéité (7) est aménagé afin de rendre étanche l'espace interstitiel (17) contre une sortie de lubrifiant,
**caractérisé en ce que** l'élément d'étanchéité
- présente une première lèvre étanche (21),
- une deuxième lèvre étanche (23) sensiblement parallèle à la première lèvre étanche, et
- repose sur la première roue dentée (3) de telle manière que la première lèvre étanche (21) loge au niveau d'un flanc (13a) d'une première dent (11a), et la deuxième lèvre étanche (23) loge au niveau d'un flanc (15a) tourné vers le flanc de la première dent d'une deuxième dent (11b) contigüe à la première dent.

13. Procédé de lubrification de l'ensemble de roues dentées d'une éolienne selon la revendication 11,
comprenant les étapes :
- de pivotement de l'ensemble de roues dentées selon une valeur angulaire prédéterminée, de sorte que l'espace interstitiel (17) entre la première et la deuxième dent de la première roue dentée (3) et la dent de la deuxième roue dentée (5) soit accessible, de préférence de moins de 15°, de manière particulièrement préférée de 2° ou moins ;
- d'amenée de lubrifiant dans l'espace interstitiel (17), en particulier au moyen d'un dispositif de distribution de lubrifiant qui est agencé de manière à déboucher en permanence avec son ouverture de sortie dans l'espace interstitiel (17), ou qui est introduit avec son ouverture de sortie dans l'espace interstitiel (17), et
- de repivotement de l'ensemble de roues dentées selon la valeur d'angle prédéterminée de sorte que l'élément d'étanchéité (1) rende étanche l'espace interstitiel (17).
